# EUROPEAN PATENT APPLICATION

(11) **EP 1 048 217 A1**
(43) Date of publication of application: **02.11.2000**
(21) Application number: 99201353.2
(22) Date of filing: 29.04.1999
(51) Int. Cl.: A23C 15/16

(54) **Butter composition with reduced fat content**

(71) Applicant: Vlaams Promotiecentrum voor Agro-en Visserijmarketing, afgekort : "VLAM", 1000 Brussel (BE)
(72) Inventor: Huyghebaert, André, 9920 Lovendegem (BE); Debergh, Renaat, 3360 Bierbeek (BE); Callier, Chris, 9090 Melle (BE)
(74) Representative: Luys, Marie-José A.H.

(57) **Abstract**

The present invention relates to a solid butter composition comprising a fat phase and at least 25 percent by weight with respect to the total weight of the butter composition of an aqueous phase, the fat phase comprising one or more fractions of substantially water free milk fat and being substantially free of vegetable oils, the aqueous phase comprising acidified sweet buttermilk. The sweet buttermilk has preferably been acidified to a pH of between approximately 4 and the pH of sweet buttermilk. Preferably, 51-100 % by weight of the aqueous phase is constituted by acidified sweet buttermilk, the remaining being mainly water.

## Description

The present invention relates to a solid butter composition comprising a fat phase and at least 25 percent by weight with respect to the total weight of the butter composition of an aqueous phase.

When conventional butter is produced starting from cream, usually a butter with a water content of between 12 and 23% by weight is obtained. Commercially available butter typically has a fat content of approximately 82%, a water content of about 16%, the remainder being salt and proteins. Products that are commercialised under the name of "butter" are substantially free of vegetable fats. It is namely imposed by law that a composition which contains vegetable oils may not be commercialised under the name of "butter". Numerous attempts have been made to produce butter compositions with a decreased fat content by increasing the water content of the product, in order to provide a product with which the calories consumption can be reduced. However, those reduced calorie butter products have been found to show a poor butter taste.

From CH-A-594.360 a solid water-in-oil emulsion, in particular a margarine, is known which comprises an aqueous phase and a fat phase. The fat phase comprises butter oil obtained from sweet cream through a process generally known to the man skilled in the art, and an amount of an unsaturated vegetable oil. The aqueous phase comprises a protein concentrate as an emulsifier, which is prepared from sour buttermilk, from which the whey has been removed. After the pH has been adjusted and the required flavouring and buffering salts have been added, the water content of the protein concentrate is adjusted by adding an amount of water. If so desired sweet buttermilk may be added to the sour buttermilk for preparing the protein concentrate, provided it is first soured. CH-A-594.360 however does not concern a butter composition, but rather a margarine with a reduced fat content.

It is the aim of the present invention to provide a solid butter composition with a reduced fat content.

This is achieved with the present invention in that the fat phase comprises one or more fractions of substantially water free milk fat and is substantially free of vegetable oils, and in that the aqueous phase comprises acidified sweet buttermilk.

Thus, a butter composition can be obtained with a reduced fat content which, although a substantial part of the fat phase has been substituted by a water phase as compared to conventional butter, appears to be a tasteful product, approaching closely the taste of conventional butter. The inventor is of the opinion, without wanting to be bound by any theory, that acidified sweet buttermilk is capable of compensating the loss of natural taste occurring when part of the fat phase is substituted by a water phase, without imparting an undesired sour taste to the butter composition. By incorporation of the sweet buttermilk, moreover a valorisation of a product which otherwise would be a more or less lost by-product of the butter production, can be performed. The butter composition of this invention presents the advantage that it almost only contains dairy based components.

The inventor has also found that the buttermilk can be incorporated in the butter composition as such, and that there is no need to subject the buttermilk to any pre-concentration step, in order to obtain a tasteful butter composition, with a mouth feeling similar to conventional butter. The inventor is of the opinion that the remarkable taste must be attributed to the fact that by making use of acidified sweet buttermilk, the butter flavour is concentrated, whereby the fat phase acts as a carrier for the flavour components present in the sweet buttermilk. Also, by the presence of the acidified sweet buttermilk, a stable emulsion can be obtained which is spreadable at refrigerator temperature.

Within the scope of the present invention acidified sweet buttermilk means buttermilk which is obtained as a side product in the churning of butter from sweet cream and which has been acidified before it is mixed with the water free milk fat. This buttermilk is preferred over buttermilk obtained from the churning of sour cream, because its acidity can be better controlled. Sweet buttermilk mostly has a pH which is approximately neutral, and may for example be approximately 6.7 or 6.8.

Within the scope of the present invention, one or more fractions of substantially water free milk fat means that the fat phase may either comprise one, two, several or all fractions of substantially water free milk fat, the latter meaning that the fat phase comprises substantially water free milk fat.

The acidified buttermilk used in the butter composition of this invention can be chemically or biologically acidified sweet buttermilk. Chemically acidified buttermilk is a sweet buttermilk to which an acid component has been added, such as for example lactic acid, citric acid, or mixtures thereof. Lactic acid is the preferred acid as its taste fits best to the taste of the other components of the butter composition. The acidified buttermilk used in the butter composition of this invention is preferably a biologically acidified swe.et buttermilk, this is a buttermilk that has been acidified by addition of lactic acid bacteria. The use of biologically acidified buttermilk presents the advantage that it contains additional vitamins and health promoting compounds. Surprisingly it has been found that with biologically acidified buttermilk an optimal tasting butter composition can be obtained, without .thereby adversely affecting the shelf life of the emulsion. The inventor is of the opinion that this must most probably be attributed to the presenc.e of flavour promoting components in the biologically acidified buttermilk.

The buttermilk used in the butter composition of this invention is preferably acidified to a pH of between 4 and the pH of sweet buttermilk, more preferably between 5 and the pH of sweet buttermilk, most preferably between 5 and 6, so as to impart an optimum taste to the butter composition and to provide an optimum solubility of the proteins present in the buttermilk.

The butter composition of this invention preferably comprises 40-70, preferably 40-60 percent by weight with respect to the weight of the composition of an aqueous phase. If the aqueous phase amounts above these maximum values, the butter flavour starts becoming insufficient, if the aqueous phase is less than 40 percent by weight the calorie content of the product is becoming too high. Thereby preferably approximately 51-100 % by weight of the aqueous phase is constituted by the sweet buttermilk, so as to obtain a butter composition with a sufficiently pronounced butter flavour. The remaining part of the aqueous phase will mainly be constituted by water, although the butter composition may contain the usual further ingredients.

The butter composition of this invention preferably has a pH of between 3 and 7, preferably between 4 and 6 so as to provide a good stability against oxidation of the emulsion upon exposure to air.

The butter composition of this invention preferably comprises 60-30, preferably 60-40 percent by weight, of a fat phase. The fat components of the fat phase of the butter composition of this invention are preferably exclusively components that are derived from substantially water free milk fat, which means that the fat phase may comprise substantially water free milk fat, one or more fractions of substantially water free milk fat or mixtures thereof. Suitable fractions of substantially water free milk fat include stearin and olein and mixtures thereof, but other fractions thereof and mixtures therewith may also be used. Preferably, the fat phase comprises 0-99 percent by weight with respect to the weight of the composition of substantially water free milk fat, 0-30 percent by weight with respect to the weight of the fat phase of stearin, 0-99 percent by weight with respect to the weight of the fat phase of olein 1 and 0-89 percent by weight with respect to the weight of the fat phase of olein 2. Olein is the liquid fraction obtained upon fractionation of butter oil. Olein 1 is the liquid fraction obtained at the first fractionation and has a melting point of approximately 20-22°C. When the first olein fraction is further fractionated, olein 2 is obtained which has a melting point of approximately 14-16°C. By adjusting the amount of the aforementioned components, the spreadablility of the solid emulsion can be adjusted. Olein is mostly added in order to soften the butter composition and render it more easily spreadable.

Within the scope of the present invention substantially water free milk fat, which is also called butter oil, is an oil fat obtained from sweet cream through a process known to the man skilled in the art. Butter oil is substantially water free and mostly contains less than approximately 0.1 percent by weight of water.

If so desired, additional components may be added to the butter composition of this invention. Examples of such additional components include salt, emulsifiers for improving the stability of the emulsion and avoiding that the emulsion is reversed, colorants for improving the colour, preserving agents. Suitable examples of emulsifiers include monoglycerides, which are preferably added in an amount of 0.5 to 1 percent by weight with respect to the total weight of the emulsion. Preferred monoglycerides are mono-acylglyceroles, for example a mixture of at least 40 percent by weight of monoglyceroles of palmitin and stearin acid. As a colorant, for example carotene may be used, which is capable of compensating the somewhat greenish colour of the butter composition towards a colour much alike the colour of conventional butter, which is yellowish-orange. Carotene can be added in an amount of up to maximum 200 mg/kg, preferably maximum 100 mg/kg of solid emulsion without adversely affecting the taste or stability of the emulsion. Salt may be added in various amounts depending on the desired taste of the end product. Furthermore, the butter composition may contain preservatives such as for example sorbic acid, sodium benzoate, in order to improve the microbial stability. This component is mostly present in an amount of approximately 0.05 - 5 percent by weight, preferably about 0.1 percent by weight with respect to the total weight of the composition. The aqueous phase may also comprise a hydrocolloid, for example gelatine or gelatinisable vegetable gums, preferably in an amount of approximately 0.05 to 2 % by weight with respect to the total weight of the product, so as to improve the binding of the aqueous phase in the fat phase.

The present invention also relates to a method for the production of the above described solid butter composition.

According to the method of this invention, first the aqueous phase and fat phase are prepared separately. Thereafter, approximately 40-70, preferably 40-60 percent by weight with respect to the total weight of the composition of an aqueous phase comprising acidified sweet buttermilk, is mixed with 60-30, preferably 60-40 percent by weight with respect to the total weight of the composition of a fat phase that is substantially free of vegetable oils, at a temperature of approximately 50-55°C, which is followed by cooling the mixture to a temperature of between approximately 5-10°C while mixing the cooled mixture, kneading the mixture and subjecting the mixture to a second cooling step.

The aqueous phase is preferably prepared by acidifying sweet buttermilk in situ, through addition of lactic acid, but preferably through addition of an amount of lactic acid bacteria. The amount of lactic acid bacteria is chosen such that a buttermilk with the desired pH of between 4 and the natural pH of sweet buttermilk, preferably between 5 and the natural pH of sweet buttermilk, more preferably between 5 and 6. If so desired, an amount of water may be added to the acidified sweet butter milk.

The fat phase is prepared by heating the fat phase to a temperature of approximately 60-80°C, preferably approximately 70°C, and cooled to a temperature of approximately 50-55°C. The fat phase comprises exclusively fat components that are derived from substantially water free milk fat, which means that the fat phase may comprise substantially water free milk fat, one or more fractions of substantially water free milk fat or mixtures thereof as described above. The fat phase preferably comprises 0-99 percent by weight with respect to the weight of the composition of substantially water free milk fat, 0-30 percent by weight with respect to the weight of the fat phase of stearin, 0- 99 percent by weight with respect to the weight of the fat phase of olein 1 and 0-89 percent by weight with respect to the weight of the fat phase of olein 2. Preferably, the heating of the fat phase is carried out in an inert atmosphere, for example in a nitrogen atmosphere or under a flow of nitrogen gas.

If so desired, conserving agents, for example sorbic acid and/or salt may be added to the aqueous phase before it is mixed with the fat phase. If so desired an emulsifying agent, preferably one or more monoglycerides, may be added to the fat phase before it is mixed with the aqueous phase.

The aqueous phase is heated to a temperature of approximately 50-70°C, preferably to approximately the same temperature as the cooled fat phase, and mixed with the heated fat phase while stirring, preferably in an inert atmosphere. The thus obtained emulsion is cooled to a temperature of approximately 45°C and maintained at that temperature for approximately 30 minutes. Incorporation of air or the inert gas are avoided as much as possible. Preferably, the liquid fat phase is added to the aqueous phase in one go so as to obtain an immediate pre-emulsification of the fat phase. Thereto, use is made of a container provided with a conventional paddle stirrer. After the fat phase has been thoroughly mixed with the aqueous phase, a butter composition is obtained of which the stability will most often be insufficient. To improve the stability of the emulsion, the emulsion is subjected to a crystallisation step at a temperature of approximately 5-10°C, whereby the mixture is continuously contacted with a cool wall and removed from the wall by means of knifes. Thereto, preferably use is made of a scraped heat exchanging device. The thus obtained cooled paste is subjected to a kneading step in order to obtain a smooth butter composition, and again subjected to a pre-emulsification step as described above. Following the second pre-emulsification step, the butter composition is packed, cooled to approximately 5°C and stored at low temperature so as to allow a post emulsification of the butter composition to take place.

If so desired, the butter composition can be subjected to a pasteurisation step before it is crystallised, so as to improve its shelf life.

The invention is further elucidated in the examples given below.

### Example 1.

In table 1 the composition of three butter compositions of the present invention is summarised. All amounts are given in percent by weight with respect to the weight of the total composition. Each of the products was given to a panel of professionals for tasting.

Product 1 was appreciated by a test panel as a very tasteful butter composition. Product 2 appeared to be a tasteful product, somewhat more sticky in the mount as compared to product 1, possibly due to the presence of gelatine. Product 3 appeared to be less tasteful than product 1.

| | 1 | 2 | 3 |
|---|---|---|---|
| butter oil | 20 | 20 | 20 |
| olein | 19.5 | 19.5 | 19.5 |
| monoglyceride | 0.5 | 0.5 | 0.5 |
| *sub total* | 40 | 40 | 40 |
| water | 0 | 0 | 29.6 |
| sweet buttermilk | 59.6 | 58.1 | 30 |
| salt | 0.3 | 0.3 | 0.3 |
| sorbic acid | 0.1 | 0.1 | 0.1 |
| gelatine | 0 | 1.5 | 0 |
| *sub total* | 60 | 60 | 60 |

### Example 2.

All amounts are given in parts by weight unless otherwise defined.

The aqueous phase and fat phase were prepared separately.

The aqueous phase was prepared by acidifying sweet buttermilk in situ, to a pH of approximately 5.5. To 59.6 parts of buttermilk, approximately 0.3 parts of salt and 0.1 parts of sorbic acid were added.

The fat phase was prepared by heating a mixture of 35.55 parts of of olein 2, 3.95 parts of stearin and 0.5 parts of GMS/MSE to a temperature of approximately 70°C and cooled to a temperature of approximately 50-55°C, under a flow of nitrogen gas.

Thereafter, approximately 60 parts of the aqueous phase were mixed with 40 parts of the fat phase, at a temperature of approximately 50-55°C, whereafter the mixture was cooled to a temperature of between approximately 5-10°C while mixing the cooled mixture, kneading the mixture and subjecting the mixture to a second cooling step.

## Claims

1. Solid butter composition comprising a fat phase and at least 25 percent by weight with respect to the total weight of the butter composition of an aqueous phase, characterised in that the fat phase comprises one or more fractions of substantially water free milk fat and is substantially free of vegetable oils, and in that the aqueous phase comprises acidified sweet buttermilk.

2. Solid butter composition as claimed in claim 1, characterised in that the acidified sweet buttermilk has a pH of between approximately 4 and the pH of sweet buttermilk.

3. Solid butter composition as claimed in claim 1 or 2, characterised in that the acidified sweet buttermilk is a biologically acidified sweet buttermilk.

4. Solid butter composition as claimed in any one of claims 1 to 3, characterised in that the aqueous phase comprises 51-100 % by weight with respect to the weight of the aqueous phase of acidified sweet buttermilk.

5. Solid butter composition as claimed in any one of claims 1 to 4, characterised in that the butter composition comprises approximately 40-60 percent by weight with respect to the total weight of the composition of the aqueous phase.

6. Solid butter composition as claimed in any one of claims 1 to 5, characterised in that the butter composition has a pH of between 3 and 7, preferably between 4 and 6.

7. Solid butter composition as claimed in any one of claims 1 to 6, characterised in that the fat phase comprises substantially water free milk fat, one or more fractions of substantially water free milk fat or mixtures thereof.

8. Solid butter composition as claimed in any one of claims 1 to 7, characterised in that the fat phase comprises 0-99 percent by weight with respect to the weight of the fat phase of substantially water free milk fat, 0-30 percent by weight with respect to the weight of the fat phase of stearin, 0-99 percent by weight with respect to the weight of the fat phase of olein 1 and 0-89 percent by weight with respect to the weight of the fat phase of olein 2.

9. Solid butter composition as claimed in any ..one of claims 1 to 8, characterised in that the fat phase further comprises approximately 0.2 to 1.5 percent by weight with respect to the total weight of the butter composition of monoglycerides.

10. Method for producing a solid butter composition, characterised in that the method comprises the steps of (1) mixing 40-70, preferably 40-60 percent by weight with respect to the total weight of the composition of an aqueous phase comprising acidified sweet buttermilk with a pH of between 4 and the pH of sweet buttermilk, with (2) 60-30, preferably 60-40 percent by weight with respect to the total weight of the composition of a fat phase which comprises one or more fractions of substantially water free milk fat and is substantially free of vegetable oils, at a temperature of approximately 50-55°C, (3) cooling the mixture to a temperature of between approximately 5-10°C while mixing the cooled mixture, (4) kneading the mixture and (5) subjecting the mixture to a second cooling step.
